# EUROPEAN PATENT SPECIFICATION

(11) **EP 3 899 657 B1**
(45) Date of publication and mention of the grant of the patent: **20.03.2024**
(21) Application number: 19831591.3
(22) Date of filing: 19.11.2019
(51) Int. Cl.: G03B 17/08, G03B 17/56, F16M 11/16

(54) **A MOUNTING DEVICE, IN PARTICULAR FOR OPTICAL, RECORDING AND MEASURING INSTRUMENTS**
MONTAGEVORRICHTUNG, INSBESONDERE FÜR OPTISCHE, AUFZEICHNUNGS- UND MESSINSTRUMENTE
DISPOSITIF DE MONTAGE, EN PARTICULIER POUR DES INSTRUMENTS OPTIQUES, D'ENREGISTREMENT ET DE MESURE

(30) Priority: 21.12.2018 CZ 201835778 U
(43) Date of publication of application: 27.10.2021
(73) Proprietor: SELUCKÝ, Karel, 62700 Brno (CZ)
(72) Inventor: SELUCKÝ, Karel, 627 00 Brno (CZ)
(74) Representative: Zemanová, Veronika
(86) International application number: PCT/CZ2019/000057
(87) International publication number: WO 2020/125822

(56) References cited:
- WO-A1-93/04314
- WO-A2-2018/140980
- CN-U- 204 986 297
- FR-A1- 2 948 523
- US-A1- 2018 131 848

## Description

### Technical field

The device is used for fixation of instruments and tools, in particular optical, recording and measuring tools, above and below the water surface and at the same time outside the water surface. In the inverted position, with the head section facing downwards, it is used for recording or measuring under the water surface. The device has versatile use as a freestanding device or as a selfie stick, when all its legs are folded longitudinally together. When used in contact with the water surface, this device is best used in conjunction with spherical waterproof cameras.

### Background Art

Devices intended for affixing devices, particularly cameras and photo cameras known from the existing status of technology, have significant shortcomings and are not universally usable for the purposes mentioned above, as they usually always focus on fulfilling a certain specific function, sometimes in a totally inappropriate manner.

There exist devices that provide a good grip on non-horizontal surfaces, such as a tripod, which may be have different tips. However, such devices cannot be used offshore because they either do not float on the water surface at all or are very unstable when adding a flotation device.

There also exist floats to which devices can be affixed, but they show considerable instability, and in particular in the case of unsteady levels, the device deviates significantly. The fixture is held very low above the surface, which does not allow for good recording. Such devices cannot be used on land because they do not have fixed stabilizing elements.

A number of these devices, in particular photo tripods and camera mounts are bulky. As a rule, the larger and heavier the device, the better the stability it provides. Such devices cannot be used at all or can be used only with difficulty for recording on or below the water surface, in particular if recording stability is required.

At the same time, the versatility of use combining a number of functions is highly desirable in demanding conditions where it is not possible or expedient to have a differently usable device for every occasion. The device according to this solution is therefore advantageous in particular for demanding use for sports, expeditions or workload.

WO2018140980A2 discloses a multipod for holding a camera above a rigid surface. US2018131848A1 discloses an underwater camera holder.

### Summary of the Invention

The disadvantages of the existing state of technology and technical prejudices are eliminated by the device
defined by claim 1, which, using the technical features described below, enables fixation of devices, in particular those intended for recording and measurement, such as cameras, photo cameras and other technology requiring stabilization to accomplish the task; this is done under various environmental conditions, and it is very easy-to-store and compact compared to the dimensions in the disassembled, i.e. working state. This device provides stabilization and fixation of a device on various surfaces on land, but also on and below the water surface.

If the device is used to attach optical recording devices and equipment for high-speed sports such as windsurfing, kiting, wakeboarding, etc., the advantage of using the device is that there is no need for a cameraman who could endanger himself or the athlete when filming. Similarly, the use of the device is also advantageous in other situations where the presence of a person is associated with an increased risk of injury or is otherwise inappropriate or disturbing.

This device is designed to minimize the risk of injury upon contact with the device, i.e. it does not contain any sharp edges or protrusions that could cause injury or could get caught on the equipment or outfit of a person handling the device or who is near the device.

The device consists of a head section for holding the device by means of known methods of connection and/or known mutually compatible elements, usually using a screw or pivot connection, thus containing a connecting element for affixing the device. The head section usually has a cylindrical shape and circular cross-section and also serves, in addition to attaching the device, for handling of the device. The advantageous design of the shape of the head section can be seen, for example, in Figs. 6a and 8 in one variation, and Figs. 19 and 21a to 21c in a second variation, the description and functions of which are given below. The shape of the head section is described below.

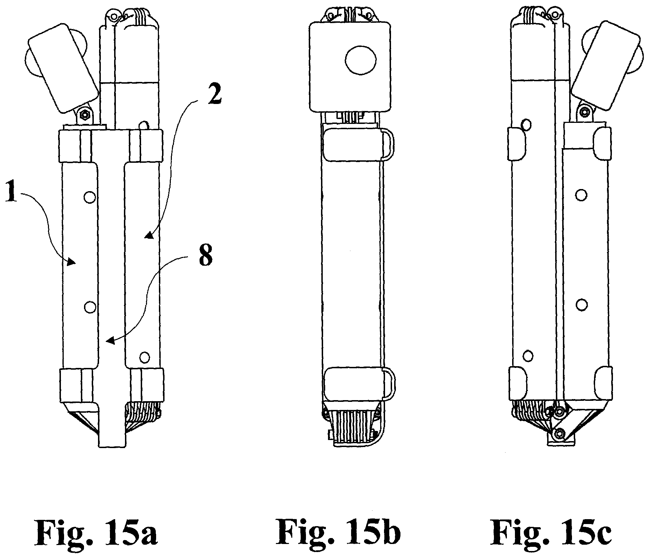

The head section may be conveniently made up of several parts, e.g. telescopically movable or firmly connected. Ideally, the head section should not exceed the length of the legs, and the advantageous ratio of the length of the legs to the head section being apparent in e.g. Fig. 15a. In another preferred design, it may be equipped with a transport holder shown for example in Figs. 15a to 16d. This holder can also be used to mount the device to a backpack.

On one of its ends, the head section has swivel joints for attaching at least three legs, or the end of the head section is equipped with an eccentric , element comprising of swivel joints for attaching the legs, each leg having a connecting element for attaching a pivot joint attached to the head section or connected by an eccentric element or is part of the eccentric element. The swivel joint is preferably a pivot joint. The swivel joint of the legs may be equipped with a lock to secure the pivoting position of the joint. The advantageous design of the swivel joints results from the attached images, but this technical solution is not dependent on these designs and also envisages other suitable methods of design of swivel joints fulfilling the required functions of the device described below.

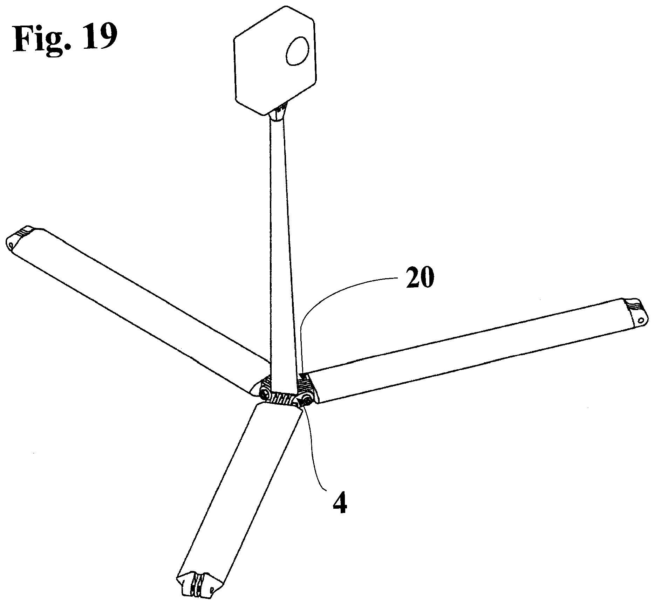

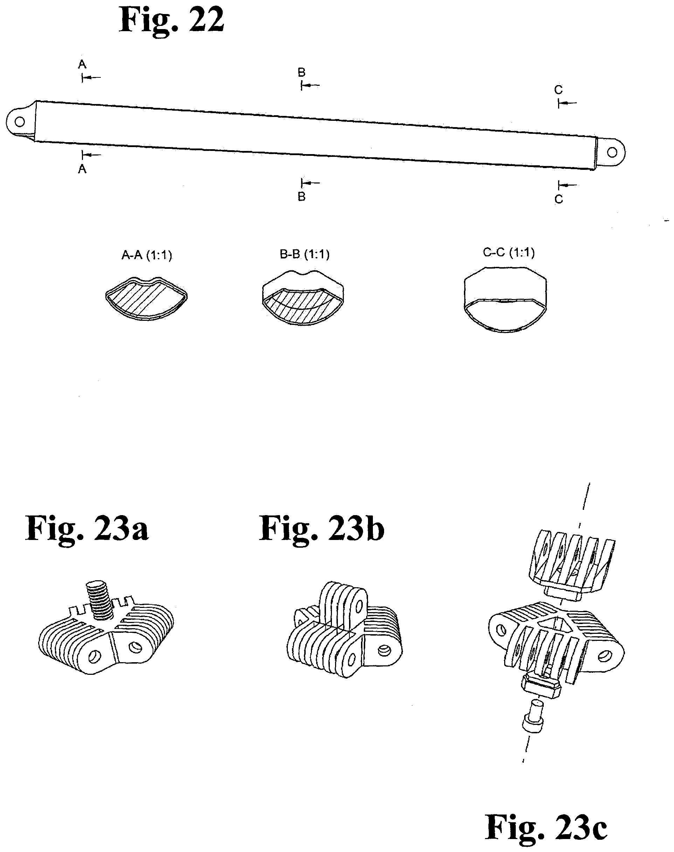

Both of the device variants, i.e. without the eccentric element and with the eccentric element, are shown in the images, where the variant without the eccentric element is shown in Figs. 19 to 23. The advantageous design of the swivel joints is shown in Fig. 23a to 23c.

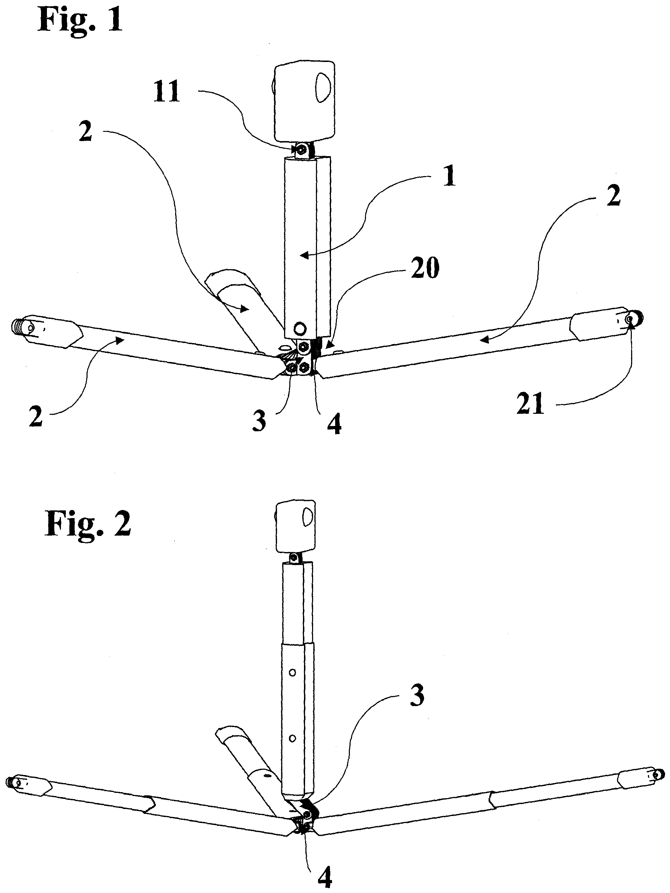

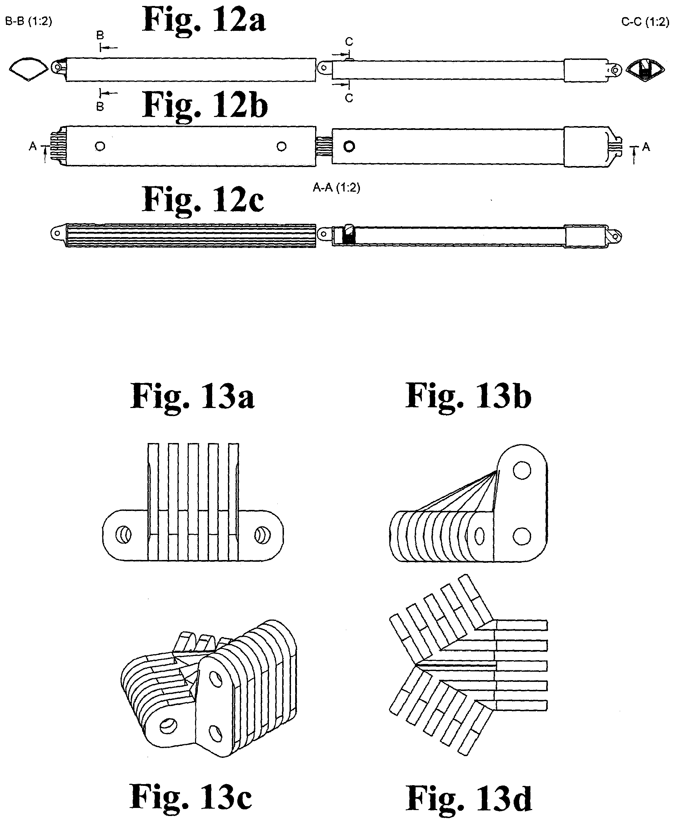

The variant with the eccentric element, which can also contain swivel joints, is shown in Figs. 1 to 18. The advantageous design of the eccentric element with the swivel joint is shown in detail in Figs. 13a to 13d, and this solution is not limited by this design; it is only one specific design.

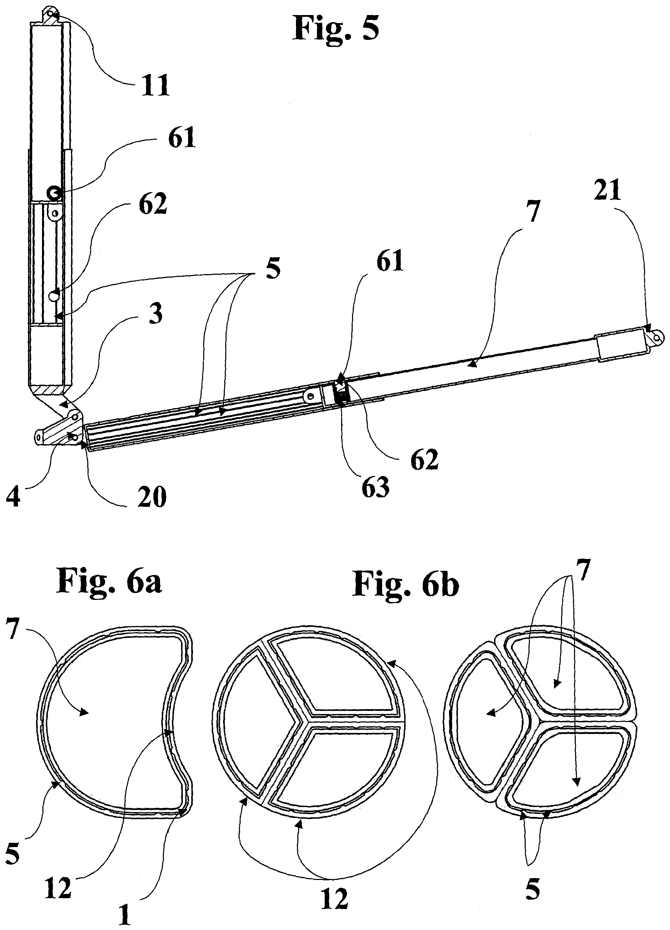

The device in the folded state is characterized in that if an eccentric element is used, the legs are longitudinally positioned side by side and together form a group of elements together forming an approximately circular cross-section as shown in Fig. 6b, with this group being parallel to the head section to which it is adjacent.

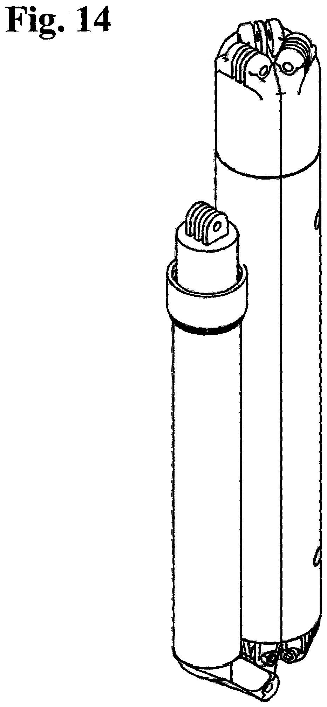

Another advantageous design is that of a head section in the part adjacent to the group of legs, the head section is shaped to accommodate, or receive, a portion of this group such that it hugs it at least partially, but over the entire length of the legs, or the group of the legs is partially recessed in its entire length into the head section. For this design, therefore, the head section contains a longitudinally extending recess which is complementary in shape to the shape of the legs and into which at least a portion of the surface of the group of the legs is recessed. This design is evident for example in Figs. 14 to 15c, wherein Figs. 15a to 15c illustrate the device with the instrument and holder.

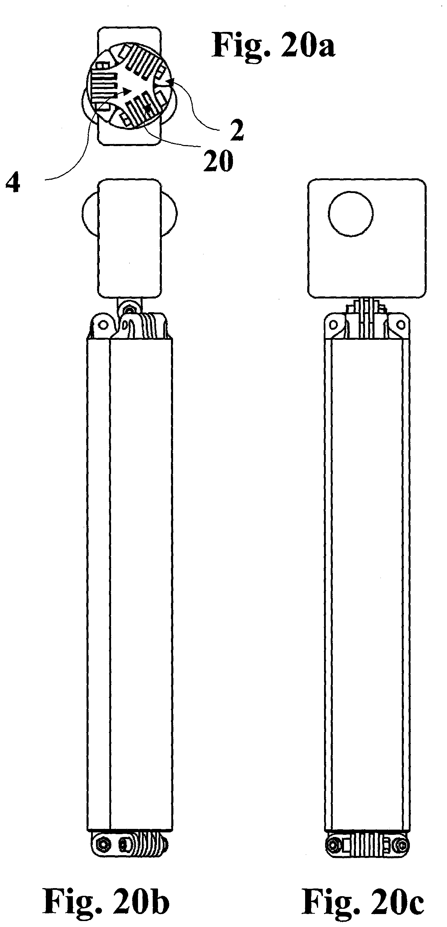

In another design, but without the eccentric element, the legs lie longitudinally on the head section in such a way that the outer leg portion follows the outer surface of the head section. The shape of the head section and the shape of the legs may vary, but the shape complementarity of adjacent parts of the head section and the legs is essential. In the most preferred variation, the resulting shape is in a collapsed state of an approximately circular cross-section, allowing for good handling and minimizing the total volume of the device during transport, as shown in Figs. 20a to 20c.

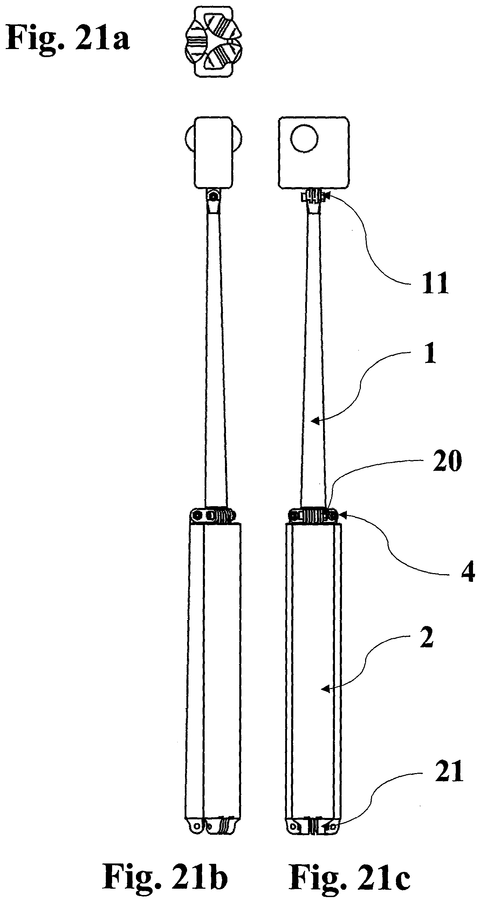

The shape of the head section in the attachment location of the swivel joints for the legs has an advantageous triangular profile, which is apparent from the accompanying images and the design of the shape of the swivel joint according to Fig. 23a and Fig. 20a, and it continuously passes into a circular cross-section towards the opposite end, as can be seen in Fig. 21a or Fig. 19.

The essence of the proposed technical solution is to provide sufficient stabilization of the fixation device in various conditions, in particular when deposited on a water surface, where the aim is to stabilize the instruments below or in particular above the surface. This is further achieved by combining several of the following features.

It is primarily necessary that the legs, but preferably also the head section, contain a cavity which is sealed or completely closed against the ingress of water, or the cavity is filled with a material allowing sufficient buoyancy, generally very porous and light, optimally non-absorbent, such as e.g. PUR foam. The cavity must have a sufficiently large volume to provide buoyancy and it is formed at least at one-half of the inner leg volume or the head section; ideally the cavity fills the entire inner leg space, with the leg walls optimally made of strong and lightweight material, in particular plastic such as ABS, ASA, composite materials, carbon or aluminium or dural. In critical parts of the profile, the legs can be reinforced to provide sufficient strength and stiffness, e.g. in the form of longitudinal or transverse ribbing.

In order to support the feasibility of this technical solution, the following example is given, for which it is necessary to start from the condition that the size of the device for use on water must correspond to the weight of the instrument to be used with this device. If the instrument is, for example, a camera that weighs 220 g, which is one of the heaviest retail spherical cameras, since most retail spherical cameras weigh in the range of approximately 100 to 170 g, and if we also know that classic action cameras and mobile phones are generally lighter than spherical cameras, and if ABS material which has a specified density of 1.0 - 1.05 g/cm3 i.e. a density of not more than 5% higher than water is used in the device, with the measured weight of the device being approximately 300 g and assuming that a substantial part of its bottom will be under water and the weight of the bottom of the device for extrusion will be 45 g, then for the potential head section of the device we will add a measured reserve of 80 g, and then we will add the weight of metal screws with nuts, i.e. approx. 20 g. Thus, the approximate weight for which buoyancy will be required after adding together these weights is 365 g. As mentioned above, the simplest leg shape of the device is an elongated cylinder divided into thirds, which is shown, for example, in Fig. 6b. The volume of the cylinder V = Pi * r2 * h - where r is the radius of the circle - will be taken as 25 mm as a size that is easy to grip in the hand. H - the height of the cylinder - for storage in a backpack approx. 400 mm. V = 3.14 * 252 * 400 = 785,000 mm3. At a water density of 0.001 g/mm3, the displacement of the cylinder with the specified dimensions is 785 g. This is more than double the considered displacement requirement. This gives sufficient margin for stability and some neglected variables, such as wall thickness of the device and estimated as, for example, the ratio of the flooded part of the device to the non-flooded part.

If the cavity is created in the head section, a condition for the proper use of this cavity is the opening of the legs of the device by less than 90 degrees. Details regarding the angle counting method and the extent of the leg opening allowed by this device are described below. This cavity takes over some of the buoyancy required to place the device on the water, allowing to reduce the size and length of the legs and hence the overall size of the device, resulting in minimizing the volume of the device, which is advantageous for the user. In addition to all other cavities, there is a cavity inside the inner part of the head section that saves the instrument from drowning if the rest of the device is damaged or detached.

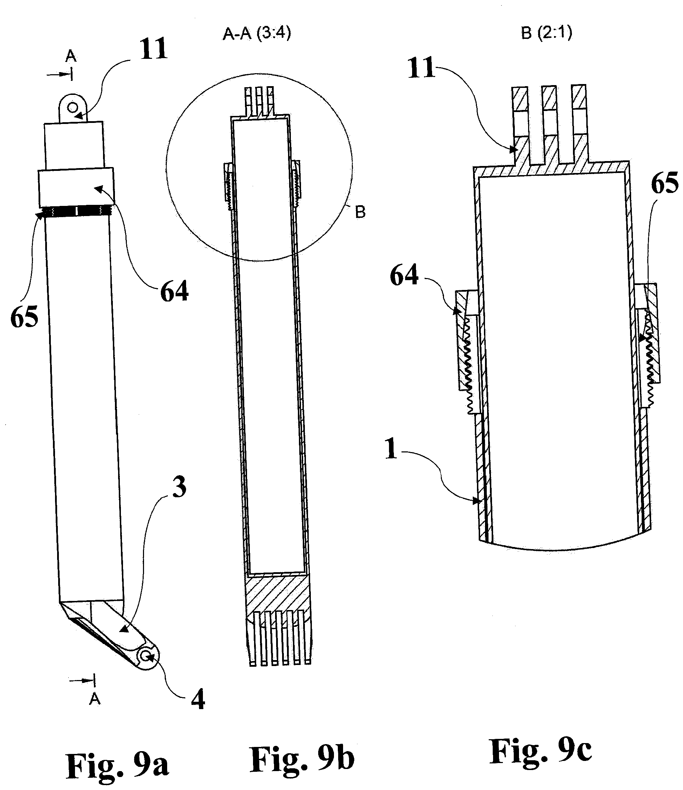

In the advantageous design, each leg consists of multiple telescopically-extendable parts. In this design, the enclosed cavity is included in the end extendable part of the leg to ensure maximum stability at or below the water surface. When telescopically extending parts are used, both on the legs and in the head section, the inner walls of these elements of the device contain longitudinal guide protrusions for easier movement of the ejected part. These protrusions reduce the likelihood of seizure of the telescopic mechanism by dirt or sand by reducing the contact area of the sliding parts. If dirt gets on the contact surface, due to its shape the outer leg will spring back and the mechanism will not seize. These protrusions also serve to reinforce the structure as mentioned above. A combination of wall openings and a spring-loaded pin element, e.g. plastic or metal as seen e.g. in Fig. 5, 7c or 8, serves to secure telescopically extendable parts. In the telescopic design of the head section, it is best if the lower hole for pin engagement is as low as possible. This allows for the drainage of water which can enter the space in which the inner part of the head section moves. Another suitable variant is a combination of an external thread and sleeve with internal thread, see Figs. 9a to 9c.

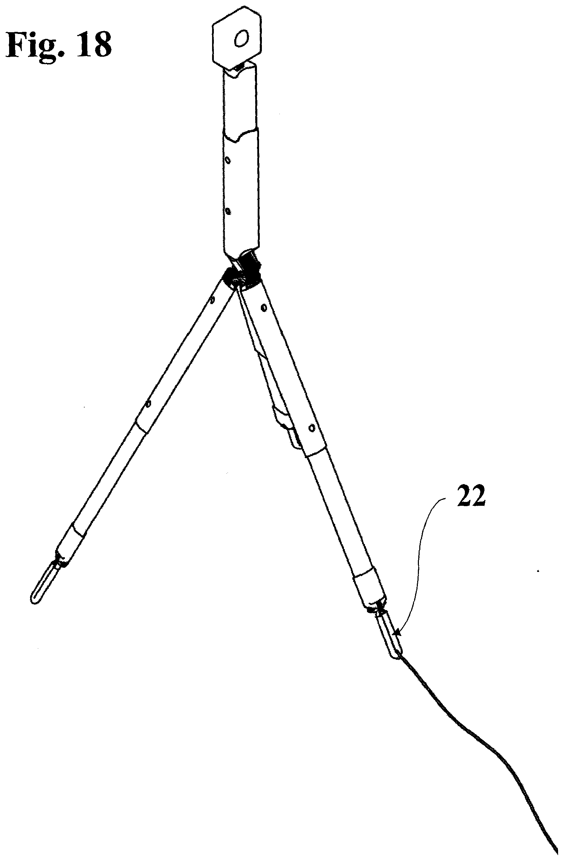

On their ends, the legs of the device may be suitably equipped with an end connecting element for attaching an additional element as an accessory, wherein the connecting element is in particular a swivel joint, and wherein the additional element is, for example, an anchor, tip or rope, e.g. as shown in Fig. 18. Alternatively, displacement and balance can be increased by adding a heavier instrument with additional stabilizers increasing the surface of the legs or floats attached directly to the leg end joint. The leg end connector may also advantageously be equipped with a screw connection to firmly attach the legs to the structure. Other additional elements attached to the leg end connectors may be suction cups, snap-hooks, adhesive holders, weights, possibly other instruments, etc. The use of weights is suitable in order to provide greater stability of the device on the edge of the buoyancy of the device. For the use of conventional cameras as instruments with limited angle of view, the legs of the device can be fitted with at least one fin that provides directional stability of the device according to the direction of water flow so that the device does not rotate. For a similar purpose, the head section can be fitted with a wind direction indicator to ensure that the device is rotated according to the wind direction. In order to immobilize the device on the water surface, it is possible to fit it with an anchor connected by a cable to the device. This design is not shown in the drawings, as a person skilled in this area of technology does not need specific guidance on how to equip the legs of the device with these elements.

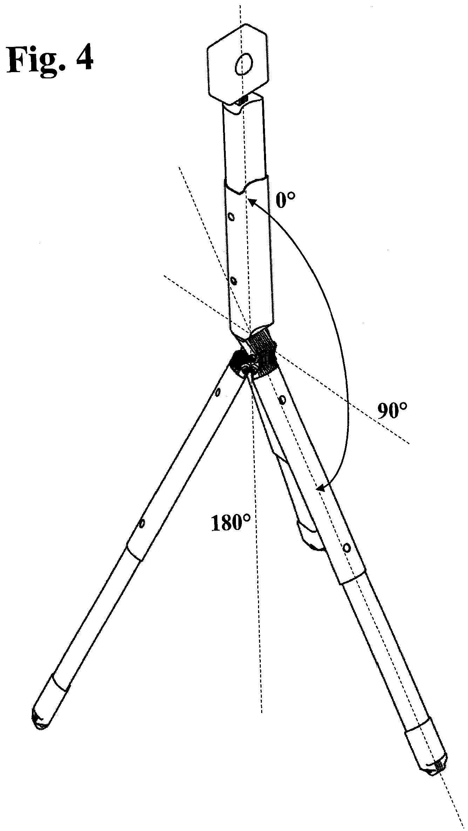

A fundamental prerequisite for using the device for the designed purposes is the angle of deflection of the legs from the folded state, which is at least 180 degrees compared to the state where the legs are folded and laid parallel to the head section, i.e. when they form a zero angle to the longitudinal axis of the head section. For the use of the device on the surface, when the head section with the instrument is above the surface, the legs are deflected approximately 60 to 90 degrees from the folded state, which is evident, for example, in Fig. 1, Fig. 2 or Fig. 19. In this configuration, the device achieves the highest buoyancy and stability. Conversely, when rotating the device where the head section is below the surface, it is desirable for the legs clutch at 90 to 130 degrees to the head section. For the purpose of stabilizing the device on a solid surface, the angle of deflection of the legs is approximately 140 to 160 degrees, as seen in e.g. Fig. 4. An angle of 180 degrees can be used to maximize the overall height of the device if the legs are equipped at their end with, for example, tips or spikes to anchor the device, e.g. into the ground.

If the device is equipped with an eccentric element, then the necessary angle of rotation of some legs exceeds 180 degrees, as the entire group of the legs rotates in a common swivel joint of the eccentric element.

Existing known devices allow the legs to open from an idle state at a maximum of approximately 60 degrees, since the legs open from the bottom upwards, while in the present solution the legs rotate from top to bottom. This is due to the limits of the swivel joint of existing devices and the method of attaching the legs around the support part of the instrument. As a rule, from the known solutions, the attachment is performed so that around the support part, the swivel joints of the legs are attached to an annular element that surrounds the support part for the instrument.

### Overview of Figures

Fig. 1 shows an axonometric view of the device with an instrument and with the eccentric element in the leg position for placement on water;
Fig. 2 shows an axonometric view of the device with an instrument and with the eccentric element in the leg position for placement on water with extended telescopic legs and the head section;

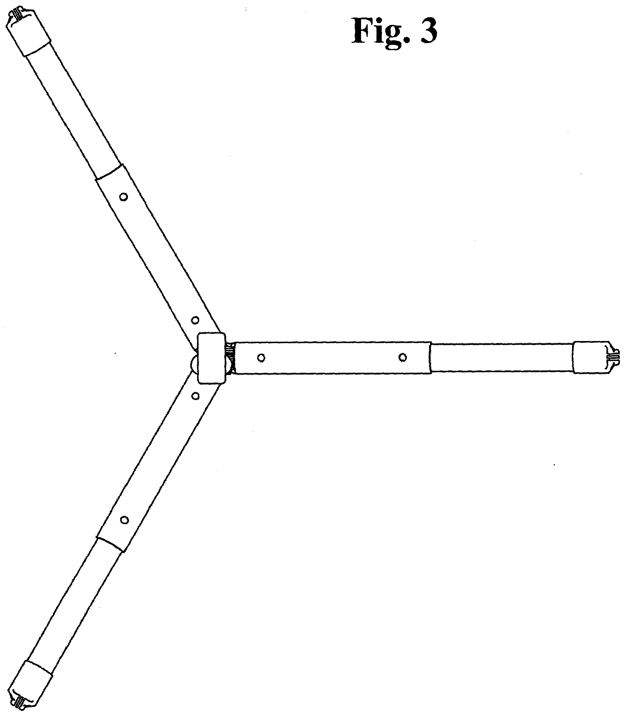

Fig. 3 shows a top view of the device according to Fig. 2;
Fig. 4 shows an axonometric view of the device according to Fig. 2 to be placed on a fixed surface with an indication of the opening angle of the legs;
Fig. 5 shows a longitudinal section of the device according to Fig. 2 with a detail of the telescopic mechanism of the legs and the head section;
Fig. 6a shows the longitudinal section of the head section showing the longitudinal recess;
Fig. 6b shows the longitudinal section via two variants of a group of the legs stacked together to form an approximately circular cross-section;

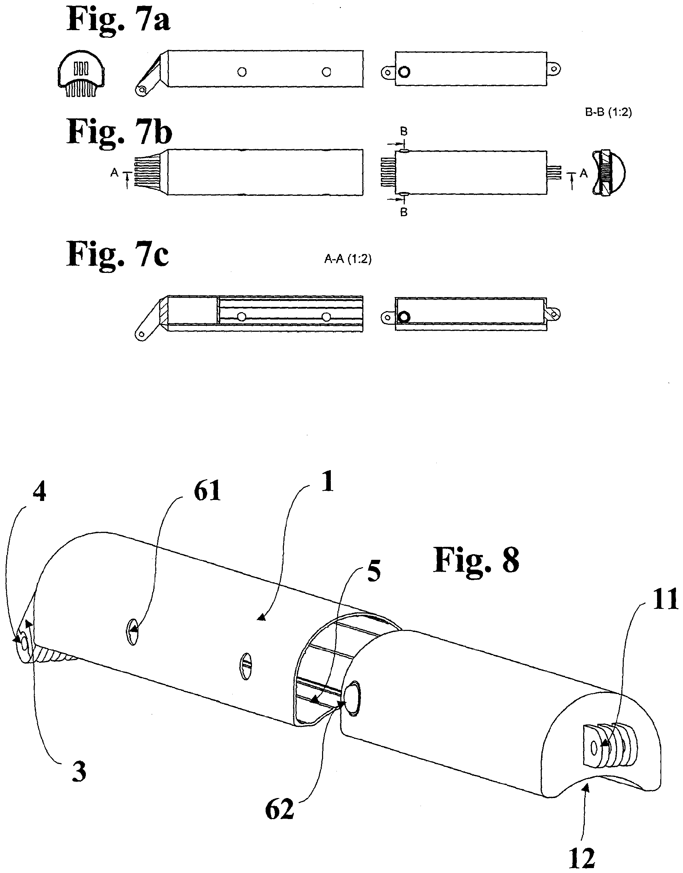

Fig. 7a shows the front view and bottom view of the head section equipped with an eccentric element and swivel joint for attaching an instrument and consisting of two telescopic parts;
Fig. 7b shows the side view of the head section equipped with an eccentric element and swivel joint for attaching an instrument consisting of two telescopic parts and cross-section B-B;
Fig. 7c shows longitudinal section A-A of the head section equipped with an eccentric element and swivel joint for attaching an instrument consisting of two telescopic parts;
Fig. 8 shows an axonometric view of the head section equipped with an eccentric element and swivel joint for attaching an instrument consisting of two telescopic parts;
Fig. 9a shows the side view of the head section equipped with an eccentric element and swivel joint for attaching an instrument consisting of two telescopic parts secured by a combination of an external thread and sleeve with internal thread;
Fig. 9b shows section A-A via the head section according to Fig. 9a;
Fig. 9c shows the detail of the design of the securing of the head section according to Fig. 9b using an external thread and sleeve with internal thread;

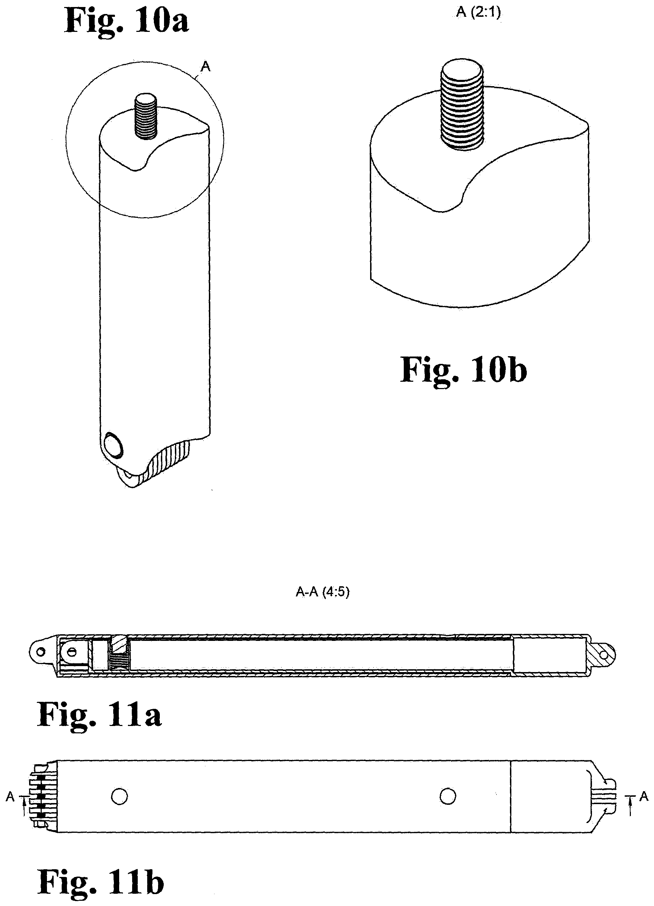

Fig. 10a shows an axonometric view of the head section equipped with a screw connection for attaching an instrument;
Fig. 10b shows the detail of the axonometric view of the head section according to Fig. 10a;
Fig. 11a shows the longitudinal section A-A via the legs of the device containing telescopic parts which is equipped at one end with a swivel joint for attachment to an eccentric element and a connecting element at the other end for attaching an additional element as an accessory;
Fig. 11b shows the front view of the legs of the device according to Fig. 11a;
Fig. 12a shows the side view of a leg of the device with the telescopic part extended and showing cross-section B-B and C-C and the shape of the leg profile in section B-B and C-C;
Fig. 12b shows the front view of the legs of the device according to Fig. 12a showing section A-A;
Fig. 12c shows the longitudinal section of the legs of the device according to Fig. 12b;
Fig. 13a shows the front view of the eccentric element with the swivel joints for attaching the legs to the head section;
Fig. 13b shows the side view of the element according to Fig. 13a;
Fig. 13c shows an axonometric view of the element according to Fig. 13a;
Fig. 13d shows the view from above of the element according to Fig. 13a;
Fig. 14 shows an axonometric view of the device with the eccentric element when folded;
Fig. 15a shows the front view of the device with the eccentric element when folded and equipped with a holder and instrument;
Fig. 15b shows the side view of the device according to Fig. 15a;
Fig. 15c shows the rear view of the device according to Fig. 15a;

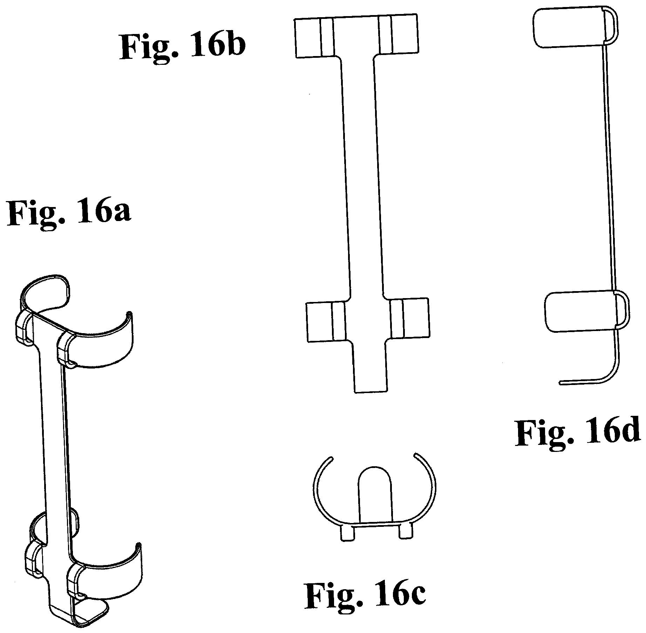

Fig. 16a shows an axonometric view of the device holder;
Fig. 16b shows the front view of the device holder according to Fig. 16a;
Fig. 16c shows the view from above of the device holder according to Fig. 16a;
Fig. 16d shows the side view of the device holder according to Fig. 16a;

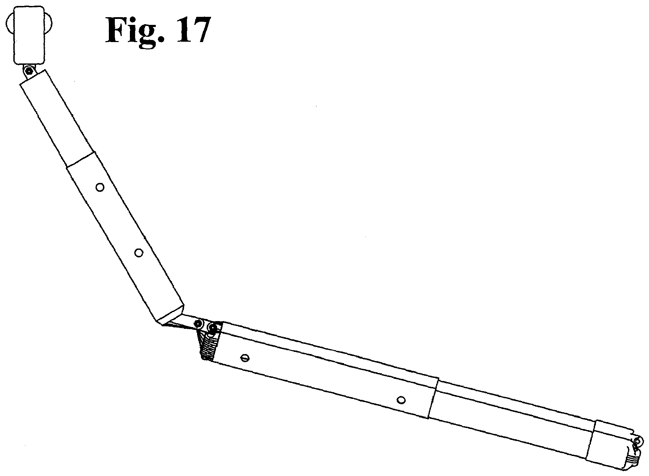

Fig. 17 shows the side view of the device with the eccentric element and instrument in a configuration for holding in a hand, like a so-called selfie stick;
Fig. 18 shows an axonometric view of the device with the eccentric element and instrument equipped with snap-hooks and rope at the leg ends;
Fig. 19 shows an axonometric view of the device without an eccentric element in a configuration for placement on water;
Fig. 20a shows the bottom view of the device without an eccentric element when folded;
Fig. 20b shows the side view of the device without an eccentric element when folded;
Fig. 20c shows the front view of the device without an eccentric element when folded;
Fig. 21a shows the bottom view of the device without an eccentric element unfolded with the legs rotated 180 degrees;
Fig. 21b shows the side view of the device according to Fig. 21a;
Fig. 21c shows the front view of the device according to Fig. 21a;
Fig. 22 shows the longitudinal section of the legs of the device without an eccentric element showing section A-A, B-B and C-C and the profile of the legs in cross-section A-A, B-B and C-C;
Fig. 23a shows an axonometric view of the first variant of the design of the swivel joint for attaching the legs and the head section for a device without an eccentric element;
Fig. 23b shows an axonometric view of the second variant of the design of the swivel joint for attaching the legs and the head section for a device without an eccentric element;
Fig. 23c shows an axonometric view of the third variant of the design of the swivel joint for attaching the legs and the head section for a device without an eccentric element;

### Examples of the Embodiments

The following examples explain the figures and are not intended to define the invention, which is solely defined by the claims.

### Example 1

A fixation device, in particular especially for optical, recording and measuring instruments that contains a head section 1 for attaching an instrument using a connecting element 11, where the lower end part of the head section 1 is equipped with swivel joints 4 for attaching at least three legs 2, each containing a connecting element 20 at the top for receiving a swivel joint 4, where the legs 2 are rotatable in the joint 4 by at least 140 degrees, and when the device is folded, the legs 2 are placed parallel along the head section 1 at an angle of 0 degrees. Each leg 2 is equipped with at least one closed cavity 7 against the ingress of water and an end connection element 21 for attaching additional elements 22 for expanding the possibilities of the use of the device.

### Example 2

Modified fixation device of example 1, where the head section 1 is shaped to receive the legs 2 adjacent to it and where the outer shape of the legs 2 is complementary in shape to the head part 1 so that the group formed by all of the legs 2 and the head part 1 has an approximately circular cross-section profile along the length of the device as seen e.g. in Fig. 20a.

### Example 3

Modified fixation device of example 2, where the shape of the head section 1 at the attachment location of the swivel joints 4 for the legs 2 has a triangular profile as shown by the shape of the swivel joint according to Fig. 23a and Fig. 20a, wherein the head section 1 continuously merges into a circular profile at the opposite end of the head section 1 equipped with a connecting element 11, as is evident from Fig. 21a or Fig. 19.

### Example 4

Modified fixation device of example 1, where, between the head section 1 and the swivel joints 4 is an eccentric element 3 deflecting the centre of the rotation of the legs 2 outside the longitudinal axis of the head section 1, and where, potentially, the eccentric element 3 forms one unit with the swivel joints 4. When the device is folded, the legs 2 jointly form a group having an approximately circular profile in the cross-section, as is evident from e.g. Fig. 6b. The head section 1 contains longitudinally extending recess 12 complementary in shape to the outer shape of the legs 2 group, to which the legs 2 group is adjacent.

### Example 5

Modified fixation device of the preceding examples, wherein the legs 2 and/or the head section 1 consists of at least two parts that are telescopically movable relative to each other and are secured by a combination of elements consisting of openings 61 in the walls of these parts and at least one pin 62 pressed by a flexible element 63 for securing the pin 62 in the selected hole 61 according to the required length of the legs 2 or the head section 1, as can be seen from e.g. Fig. 8, and/or are secured by a combination of elements consisting of an external thread 65 with longitudinal notches equipped in the end part of the outer component and sleeves 64 with an internal thread for position fixation of the internal part of the leg 2 or the head section 1.

### Example 6

Modified fixation device of example 5, where the internal walls of the legs 2 and/or the head sections include longitudinal protrusions 5.

### Example 7

Modified fixation device of the above examples, wherein the connecting element 21 is revolving and/or a screw connection and wherein an additional element 22 is an anchor and/or tip and/or rope and/or suction cup and/or snap-hook and/or adhesive holder and/or weights and/or stabilizer enlarging the area of the leg 2 and/or float and/or other instrument.

### Example 8

Modified fixation device of the above examples, wherein the head section 1 is equipped with a wind sign to ensure rotation of the device according to the wind direction.

### Example 9

Modified fixation device of the above examples, wherein the cavity 7 is filled with a non-absorbent porous lightweight material such as PUR foam.

### Example 10

Modified fixation device of the above examples, wherein the device is equipped with a transport holder 8 connecting the head section 1 with the legs 2.

### Example 11

Modified fixation device of the above examples, wherein the device and/or parts thereof are made from plastic, in particular ABS and/or ASA, and/or composite materials and/or carbon and/or aluminium and/or dural.

### Industrial application

The device is industrially usable for fixation of instruments and devices, in particular recording and measuring devices, above and below the water surface and at the same time outside the water surface, mainly for the purpose of sports, recreation, entertainment, but also for professional work use.

### List of reference marks

- 1: - head section
- 11: - connecting element
- 12: - recess
- 2: - leg
- 20: - connecting element
- 21: - end connecting element
- 22: - additional element
- 3: - eccentric element
- 4: - swivel joint
- 5: - protrusion
- 61: - opening
- 62: - pin
- 63: - flexible element
- 64: - external thread with longitudinal notches
- 65: - sleeve with internal thread
- 7: - cavity
- 8: - holder

## Claims

1. A mounting device, in particular for optical, recording and measuring instruments, comprising a head section (1) for attaching an instrument using a connecting element (11), where the lower end part of the head section (1) is equipped with swivel joints (4), by means of which at least three legs (2) are attached, each containing a connecting element (20) at the top for receiving a swivel joint (4), where the legs (2) are rotatable in the joint (4) by at least 140 degrees, and when the device is folded, the legs (2) are placed parallel along the head section (1) at an angle of 0 degrees, and legs (2) are equipped with an end connecting element (21) for attaching an additional element (22) for expanding the possibilities of the use of the device **characterised in that** the legs (2) and optionally in addition the head section (1) are equipped with water-impermeable cavities (7) to provide sufficient stabilization of the mounting device when deposited on a water surface to stabilize the optical, recording or measuring instrument above the water surface.

2. Mounting device according to claim 1, **characterized in that** the head section (1) is shaped to receive legs (2), which are adjacent to it when the device is folded, and where the outer shape of the legs (2) is complementary in shape to the shape of the head section (1) so that the group formed by all of the legs (2) and the head section (1) has an approximately circular cross-section profile along the length of the device.

3. Mounting device according to claim 2, **characterized in that** the shape of the head section (1) at the attachment location of the swivel joints (4) for the legs (2) has a triangular profile in the cross-section, and the shape of the head section (1) continuously merges into a circular profile at the opposite end of the head section (1) equipped with a connecting element (11).

4. Mounting device according to claim 1, **characterized in that** between the head section (1) and the swivel joints (4) is an eccentric element (3) deflecting the centre of the rotation of the legs (2) outside the longitudinal axis of the head section (1), and, when the device is folded, the legs (2) jointly form a group having an approximately circular profile in the cross-section, and the head section (1) contains longitudinally extending recess (12) complementary in shape to the outer shape of the leg (2) group, to which the leg (2) group is adjacent.

5. Mounting device according to claim 4, **characterized in that** the leg (2) group is rotatable in swivel joint (4) placed on the eccentric element by more than 180 degrees.

6. Mounting device according to claim 1 or 4, **characterized in that** the swivel joint (4) is equipped with locking to secure the position of joint rotation (4).

7. Mounting device according to claim 4, or 5, **characterized in that** the swivel joints (4) and eccentric element (3) form one unit.

8. Mounting device according to any of the previous claims, **characterized in that** legs (2) and/or the head section (1) consist of at least two parts that are telescopically movable relative to each other and are secured by a combination of elements consisting of openings (61) in the walls of these parts and at least one pin (62) pressed by a flexible element (63) for securing the pin (62) in the selected hole (61) and/or are secured by a combination of elements consisting of an external thread (65) with longitudinal notches equipped in the end part of the outer part and sleeves (64) with an internal thread for position fixation of the internal part of the legs (2) and/or the head section (1) .

9. Mounting device according to claim 6 or 7, **characterized in that** the internal walls of the legs (2) and/or the head section (1) contain longitudinal protrusions (5) .

10. Mounting device according to any of the previous claims, **characterized in that** the connecting element (21) is a rotatable and/or screw connection.

11. Mounting device according to any of the previous claims, **characterized by** comprising an additional element (22) which is an anchor and/or tip and/or rope and/or suction cup and/or snap-hook and/or adhesive holder and/or weights and/or stabilizer enlarging the area of the legs (2) and/or float and/or other instrument.

12. Mounting device according to any of the previous claims, **characterized in that** the head section (1) is equipped with a wind sign to ensure turning of the device according to the wind direction.

13. Mounting device according to any of the previous claims, **characterized in that** the cavity (7) is filled with a non-absorbent porous lightweight material such as PUR foam.

14. Mounting device according to any of the previous claims, **characterized in that** the cavity (7) is formed at least at the half of the inner leg volume or the head section.

15. Mounting device according to any of the previous claims, **characterized in that** the device is equipped with a transport holder (8) connecting the legs (2) to the head section (1).

## Patentansprüche

1. Befestigungseinrichtung, insbesondere für optische Geräte, Aufnahmegeräte und Messgeräte, mit einem Kopfteil (1) zum Befestigen eines Gerätes mittels eines Verbindungselements (11), wobei der untere Endteil des Kopfteils (1) mit Drehgelenken (4) ausgestattet ist, mittels dennen mindestens drei Beinen (2) befestigt sind, die jeweils oben ein Verbindungselement (20) zur Aufnahme des Drehgelenks (4) enthalten, wobei die Beine (2) im Gelenk (4) drehbar um mindestens 140° sind, und wenn die Einrichtung zusammengeklappt ist, sind die Beine (2) parallel entlang des Kopfteils (1) unter einem Winkel von 0° angeordnet, und die Beine (2) mit einem Endverbindungselement (21) zum Anbringen eines Zusatzelements (22) zur Erweiterung der Einsatzmöglichkeiten der Einrichtung ausgestattet sind, **dadurch gekennzeichnet, dass** die Beine (2) und wählbar auch das Kopfteil (1) mit wasserundurchlässigen Hohlräume (7) zur Gewährleistung von ausreichender Stabilisierung der Befestigungseinrichtung wenn es auf einer Wasseroberfläche abgelegt wird, um das optische Gerät, oder Aufnahme- oder Messgerät oberhalb der Wasseroberfläche zu stabilisieren.

2. Befestigungseinrichtung nach Anspruch 1, **dadurch gekennzeichnet, dass** das Kopfteil (1) so geformt ist, dass es die Beine (2) aufnimmt, die im zusammengeklappten Zustand der Einrichtung an ihm anliegen, und wobei die äußere Form der Beine (2) komplementäre Form zur Form des Kopfteils (1) ist, so dass die aus allen Beinen (2) und dem Kopfteil (1) gebildete Gruppe über die Länge der Vorrichtung ein annähernd kreisförmiges Querschnittsprofil aufweist.

3. Befestigungseinrichtung nach Anspruch 2, **dadurch gekennzeichnet, dass** die Form des Kopfteils (1) an der Befestigungsstelle der Drehgelenke (4) für die Beine (2) im Querschnitt ein dreieckiges Profil aufweist und dass die Form des Kopfteils (1) am gegenüberliegenden, mit einem Verbindungselement (11) ausgestatteten Ende des Kopfteils (1) kontinuierlich in ein Kreisprofil übergeht.

4. Befestigungseinrichtung nach Anspruch 1, **dadurch gekennzeichnet, dass** sich zwischen dem Kopfteil (1) und den Drehgelenken (4) ein Exzenterelement (3) befindet, das den Drehpunkt der Beine (2) aus der Längsachse auslenkt, und das Kopfteil (1) und die Beine (2) im zusammengeklappten Zustand der Vorrichtung gemeinsam eine Gruppe mit im Querschnitt etwa kreisförmigem Profil bilden, und das Kopfteil (1) eine in Längsrichtung verlaufende komplementäre Aussparung (12) enthält, deren Form zu der äußeren Form der Gruppe von Beinen (2) komplementär ist und an die die Gruppe von Beinen (2) angrenzt.

5. Befestigungseinrichtung nach Anspruch 4, **dadurch gekennzeichnet, dass** die Beingruppe (2) im auf dem Exzenterelement angeordneten Drehgelenk (4) um mehr als 180 Grad drehbar ist.

6. Befestigungseinrichtung nach Anspruch 1 oder 4, **dadurch gekennzeichnet, dass** das Drehgelenk (4) mit einer Arretierung zur Lagesicherung des Drehgelenks (4) ausgestattet ist.

7. Befestigungseinrichtung nach Anspruch 4 oder 5, **dadurch gekennzeichnet, dass** Drehgelenke (4) und Exzenterelement (3) eine Einheit bilden.

8. Befestigungseinrichtung nach einem der vorhergehenden Ansprüche, **dadurch gekennzeichnet, dass** die Beine (2) und/oder das Kopfteil (1) aus mindestens zwei teleskopartig zueinander beweglichen Teilen bestehen und durch eine Elementkombination gesichert sind bestehend aus Öffnungen (61) in den Wänden dieser Teile und mindestens einem Stift (62), der durch ein flexibles Element (63) gedrückt wird, um den Stift (62) im ausgewählten Loch (61) zu befestigen, und/oder durch eine Kombination von Elementen bestehend aus einem Außengewinde (64) mit Längnuten im Endteil des Außenteils und Hülsen (65) mit Innengewinde zur Lagefixierung des Innenteils der Beine (2) und/oder des Kopfteils (1) gesichert sind.

9. Befestigungseinrichtung nach Anspruch 6 oder 7, **dadurch gekennzeichnet, dass** die Innenwände der Beine (2) und/oder des Kopfteils (1) Längsvorsprünge (5) enthalten.

10. Befestigungseinrichtung nach einem der vorhergehenden Ansprüche, **dadurch gekennzeichnet, dass** das Verbindungselement (21) eine Dreh- und/oder Schraubverbindung ist.

11. Befestigungseinrichtung nach einem der vorhergehenden Ansprüche, **gekennzeichnet durch** ein Zusatzelement (22), das ein Anker und/oder eine Spitze und/oder ein Seil und/oder ein Saugnapf und/oder ein Karabinerhaken und/oder ein Klebehalter und/oder Gewicht und/oder Stabilisator, der Fläche der Beine (2) vergrößert, und/oder Schwimmkörper und/oder ein anderes Instrument ist.

12. Montagegerät nach einem der vorhergehenden Ansprüche, **dadurch gekennzeichnet, dass** das Kopfteil (1) mit einem Windschild ausgestattet ist, um eine Drehung des Geräts entsprechend der Windrichtung zu gewährleisten.

13. Befestigungseinrichtung nach einem der vorhergehenden Ansprüche, **dadurch gekennzeichnet, dass** der Hohlraum (7) mit einem nicht absorbierenden porösen Leichtmaterial wie PUR-Schaum gefüllt ist.

14. Befestigungseinrichtung nach einem der vorhergehenden Ansprüche, **dadurch gekennzeichnet, dass** der Hohlraum (7) mindestens auf der Hälfte des Beininnenvolumens bzw. des Kopfabschnitts ausgebildet ist.

15. Montagegerät nach einem der vorhergehenden Ansprüche, **dadurch gekennzeichnet, dass** das Gerät mit einer Transporthalterung (8) ausgestattet ist, die die Beine (2) mit dem Kopfteil (1) verbindet.

## Revendications

1. Dispositif de fixation, particulièrement pour des instruments optiques, instruments d'enregistrement et instruments de mesure, comprenant une section (1) de tête pour attacher un instrument à l'aide d'un élément (11) de connexion, où la partie terminale inférieure de la section (1) de tête est pourvue d'articulations (4) pivotantes, au moyen desquelles au moins trois jambes (2) sont attachées, chacune d'au moins trois jambes (2) comprenant un élément (20) de connexion en haut pour recevoir une articulation (4) pivotante, où les jambes (2) peuvent tourner dans l'articulation (4) d'au moins 140 degrés, et lorsque le dispositif est plié, les jambes (2) sont placées parallèlement le long de la section (1) de tête à un angle de 0 degrés, et les jambes (2) sont pourvues d'un élément (21) terminal de connexion pour attacher un élément (22) supplémentaire pour un élargissement de possibilités d'utilisation du dispositif, **caractérisé en ce que** les jambes (2), et optionnellement de plus la section (1) de tête, sont pourvues de cavités (7) imperméables à l'eau pour assurer la stabilisation suffisante du dispositif de fixation lorsqu'il est déposé sur un plan d'eau, afin de stabiliser l'instrument optique, l'instrument d'enregistrement ou l'instrument de mesure au-dessus du plan d'eau.

2. Dispositif de fixation selon la revendication 1, **caractérisé en ce que** la section (1) de tête est formée pour recevoir les jambes (2) adjacentes à celle-ci lorsque le dispositif est plié, et où la forme extérieure des jambes (2) a une forme complémentaire à la forme de la section (1) de tête afin que le groupe formé par toutes les jambes (2) et la section (1) de tête ait un profil de section transversale quasiment circulaire le long du dispositif.

3. Dispositif de fixation selon la revendication 2, **caractérisé en ce que** la forme de la section (1) de tête à la place de fixation des articulations (4) pivotantes pour les jambes (2) a un profil triangulaire dans la section transversale, et la forme de la section (1) de tête se transforme de façon continue dans un profil circulaire à l'extrémité opposante de la section (1) de tête pourvue d'un élément (11) de connexion.

4. Dispositif de fixation selon la revendication 1, **caractérisé en ce qu'**entre la section (1) de tête et les articulations (4) pivotantes se trouve un élément (3) excentrique déviant le centre de la rotation des jambes (2) en dehors de l'axe longitudinale de la section (1) de tête, et lorsque le dispositif est plié, les jambes (2) forment conjointement un groupe ayant un profile de la section transversale quasiment circulaire, et la section (1) de tête comprend un creux (12) s'étendant longitudinalement, où la forme de celui-ci est complémentaire à la forme extérieure du groupe de jambes (2), le groupe de jambes (2) étant adjacent au creux (12).

5. Dispositif de fixation selon la revendication 4, **caractérisé en ce que** le groupe de jambes (2) peut tourner dans l'articulation (4) pivotante, située sur l'élément excentrique, de plus de 180 degrés.

6. Dispositif de fixation selon la revendication 1 ou 4, **caractérisé en ce que** l'articulation (4) pivotante est pourvue d'un verrouillage pour sécuriser la position de la rotation (4) de l'articulation.

7. Dispositif de fixation selon la revendication 4 ou 5, **caractérisé en ce que** les articulations (4) pivotantes et l'élément (3) excentrique forment une seule unité.

8. Dispositif de fixation selon l'une quelconque des revendications précédentes, **caractérisé en ce que** les jambes (2) et/ou la section (1) de tête sont constituées d'au moins deux parties qui peuvent se déplacer les unes par rapport aux autres de manière télescopique et qui sont sécurisées par une combinaison d'éléments constitués d'ouvertures (61) dans les parois de ces parties et au moins une tige (62) pressée par un élément (63) flexible afin de sécuriser la tige (62) dans l'ouverture (61) sélectionné et/ou elles sont sécurisées par une combinaison d'éléments constitués d'un filetage (65) extérieure comportant des encoches longitudinales disposées à la partie terminale de la partie extérieure, et de manchons (64) comportant un filetage intérieure pour la fixation de la position de la partie intérieure des jambes (2) et/ou de la section (1) de tête.

9. Dispositif de fixation selon la revendication 6 ou 7, **caractérisé en ce que** les parois intérieures des jambes (2) et/ou la section (1) de tête comprennent des saillies (5) longitudinales.

10. Dispositif de fixation selon l'une quelconque des revendications précédentes, **caractérisé en ce que** l'élément (21) de connexion est une connexion rotative et/ou une connexion à vis.

11. Dispositif de fixation selon l'une quelconque des revendications précédentes, **caractérisé en ce qu'**il comprend un élément (22) supplémentaire qui est une ancre et/ou une pointe et/ou une corde et/ou une ventouse et/ou un mousqueton et/ou un support adhésif et/ou des poids et/ou un stabilisateur élargissant la surface des jambes (2) et/ou un flotteur et/ou un autre instrument.

12. Dispositif de fixation selon l'une quelconque des revendications précédentes, **caractérisé en ce que** la section (1) de tête est pourvue d'un indicateur du vent afin d'assurer une rotation du dispositif selon la direction du vent.

13. Dispositif de fixation selon l'une quelconque des revendications précédentes, **caractérisé en ce que** la cavité (7) est remplie d'un matériau non absorbant poreux léger tel que la mousse PUR.

14. Dispositif de fixation selon l'une quelconque des revendications précédentes, **caractérisé en ce que** la cavité (7) est formée au moins à la moitié du volume intérieure de la jambe ou de la section de tête.

15. Dispositif de fixation selon l'une quelconque des revendications précédentes, **caractérisé en ce que** le dispositif est pourvu d'un support (8) de transport reliant les jambes (2) à la section (1) de tête.
